# EUROPÄISCHE PATENTSCHRIFT

(11) **EP 3 244 989 B1**
(45) Veröffentlichungstag und Bekanntmachung des Hinweises auf die Patenterteilung: **25.03.2020**
(21) Anmeldenummer: 15816699.1
(22) Anmeldetag: 11.12.2015
(51) Int. Cl.: B01D 53/56, B01D 53/90, C22B 23/00

(54) **VERFAHREN ZUR REDUZIERUNG VON STICKOXIDEN IM ABGAS EINER FLUGSTROMBEHANDLUNGSANLAGE**
METHOD FOR REDUCING NITROGEN OXIDES IN THE EXHAUST GAS OF AN ENTRAINED-FLOW TREATMENT PLANT
PROCÉDÉ DE RÉDUCTION DES OXYDES D'AZOTE DANS LES EFFLUENTS GAZEUX D'UNE INSTALLATION DE TRAITEMENT À FLUX ENTRAINÉ DÉRIVÉ

(30) Priorität: 14.01.2015 DE 102015100494
(43) Veröffentlichungstag der Anmeldung: 22.11.2017
(73) Patentinhaber: thyssenkrupp Industrial Solutions AG, 45143 Essen (DE); thyssenkrupp AG, 45143 Essen (DE)
(72) Erfinder: GRUND, Guido, 59457 Werl (DE); SCHEFER, Dirk, 59320 Ennigerloh (DE)
(74) Vertreter: Tetzner, Michael
(86) Internationale Anmeldenummer: PCT/EP2015/079447
(87) Internationale Veröffentlichungsnummer: WO 2016/113049

(56) Entgegenhaltungen:
- WO-A1-01/66233
- CH-B1- 698 991
- CN-U- 202 555 173
- US-A1- 2008 070 177
- US-A1- 2014 134 089

## Beschreibung

Die Erfindung betrifft ein Verfahren zur Reduzierung von Stickoxiden im Abgas einer Flugstrombehandlungsanlage, in der ein Material thermisch behandelt wird, wobei die dazu genutzte Wärmeenergie zumindest teilweise von einem Heißgaserzeuger bereitgestellt wird.

Eine Flugstrombehandlungsanlage zur thermischen Behandlung von feinkörnigem Material, beispielsweise zum Calcinieren, Brennen oder Sintern von Dolomit, Magnesit, Kalk oder Aluminiumhydroxid, ist beispielsweise aus der DE 33 29 233 A1 bekannt. Die darin beschriebene Flugstrombehandlungsanlage umfasst einen mehrstufigen Zyklonwärmetauscher mit einer Vorwärmzone, einer Hochtemperaturzone und einer Kühlzone. Dabei durchströmt ein Gas, nämlich Luft, die Kühlzone und ein Gemisch aus Luft und Heißgas in den anderen Zonen die verschiedenen Zyklone (bezogen auf die Schwerkraftrichtung) von unten nach oben, während das thermisch zu behandelnde Material die Zyklone in Gegenstromrichtung von oben nach unten durchläuft. Dabei wird in jedem der Zyklone das Material aus dem Gasstrom separiert und über einen Auslass in eine Gasströmung eingebracht, die anschließend dem darunterliegenden Zyklon zugeführt wird. In den unten liegenden Zyklonen der Kühlzone kühlt die über einen Verdichter zugeführte Gasströmung das Material, wobei das Gas vorgewärmt wird. Dieses durchströmt anschließend ein Steigrohr der Hochtemperaturzone, in der die eigentliche thermische Behandlung des aus der Vorwärmzone zugeführten Materials erfolgt. Dabei wird der Gasströmung in der Hochtemperaturzone zusätzlich über einen Brenner ein Heißgas zugeführt, um die für die Behandlung erforderliche thermische Energie bereitzustellen. Das die Hochtemperaturzone verlassende Gas wird anschließend in der Vorwärmzone zur Vorwärmung des Materials genutzt.

Infolge einer zunehmenden Verschärfung von Abgasvorschriften auch für industrielle Anlagen rückt eine Abgasbehandlung mit dem Ziel der Verminderung von Schadstoffen zunehmend in den Fokus der Hersteller und Betreiber solcher Anlagen. Dabei liegt ein Schwerpunkt in der Reduktion von Stickoxiden im Abgas.

Bekannt ist eine Entstickung von Rauchgasen aus Anlagen zur thermischen Behandlung eines Materials mittels selektiver katalytische Reduktion (SCR), bei der ein beispielsweise ammoniakhaltiges Reduktionsmittel in den Abgasstrom eingebracht wird, durch das eine Reduktion der Stickoxide realisiert wird. Durch die Anwesenheit eines Katalysators, der von dem mit dem Reduktionsmittel versetzen Abgasstrom durch- oder umströmt wird, soll die für die Reduktion erforderliche Temperatur möglichst weit abgesenkt werden, sodass möglichst wenig Wärmeenergie mit dem anschließend in die Umgebung entlassenen Abgas verloren geht. Ein solches Verfahren und eine entsprechende Anlage sind beispielsweise aus der DE 197 20 205 A1 bekannt.

Bekannt ist auch die sogenannte selektive nicht-katalytische Reduktion (SNCR) von Abgasen zur Entstickung, bei der auf die temperaturabsenkende Wirkung eines Katalysators verzichtet wird. Vorteil dabei sind die geringeren Kosten, die sich durch die Einsparungen des Katalysators ergeben. Nachteilig ist jedoch, dass für die selektive nicht-katalytische Reduktion Abgastemperaturen um ca. 900°C erforderlich sind, um eine Reduktion der Stickoxide mit ausreichendem Wirkungsgrad erreichen zu können. Würde das Abgas nach der Behandlung direkt in die Atmosphäre entlassen, würde dies aufgrund der hohen Temperatur, die dieses noch aufweist, einen erheblichen Energieverlust darstellen. Eine weitere Nutzung dieser Wärmeenergie durch beispielsweise einen Wärmeübergang auf ein anderes Medium ist vielfach nur schwierig umsetzbar, unter anderem auch, weil dabei keine erneute Belastung des Abgases mit Stickoxiden erfolgen sollte.

Die WO 01/66233 A1 offenbart ein Verfahren, bei dem Zementrohmehl in einem Zyklonvorwärmer vorgewärmt und anschließend in einem Drehrohrofen gebrannt wird, wobei dem Rauchgas stromab des Drehrohrofens an mehreren Stellen ein Reduktionsmittel zugeführt wird, um eine Entstickung in einem dem Zyklonvorwärmer nachgeschalteten SCR-Katalysator zu realisieren.

Die US 2008/0070177 A1 beschreibt ein Verfahren, bei dem Rauchgas eines Drehrohrofens oder Kalzinators mittels SNCR entstickt werden soll, wobei hierfür das Reduktionsmittel zunächst in eine Druckluftströmung eingebracht wird, die daraufhin mit dem Rauchgas vermischt wird.

Die US 2014/0134089 A1 offenbart ein Verfahren zur Behandlung von Rauchgas in einem Zyklonvorwärmer mittels SNCR, wobei hierfür am in Strömungsrichtung des Rauchgases hinteren Ende des Zyklonvorwärmers ein Teilstrom des Rauchgases, das dann nur noch eine Temperatur von zwischen 200°C und 600°C aufweist, abgezweigt, in einem Filter gereinigt und dann in diesen Teilstrom ein Reduktionsmittel eingedüst wird. Diese Mischung aus Rauchgas und Reduktionsmittel wird dann in einem mittigen Bereich des Zyklonvorwärmers wieder in die Hauptströmung des Rauchgases eingebracht.

Die CH 698 991 B1 und die CN 202 555 173 U offenbaren jeweils ein Verfahren zum Brennen von Zementklinker, bei dem Reduktionsmittel in einen Zyklonvorwärmer zur Umsetzung einer SNCR eingebracht wird.

Ausgehend von diesem Stand der Technik hat der Erfindung die Aufgabe zugrunde gelegen, eine vorteilhafte Möglichkeit zur Entstickung von aus einer Flugstrombehandlungsanlage zur thermischen Behandlung eines Materials stammendem Abgas anzugeben.

Diese Aufgabe wird mittels eines Verfahrens gemäß dem Patentanspruch 1 gelöst. Vorteilhafte Ausgestaltungen des erfindungsgemäßen Verfahrens sind Gegenstände der weiteren Patentansprüche und ergeben sich aus der nachfolgenden Beschreibung der Erfindung.

Der Erfindung liegt die Erkenntnis zugrunde, dass bei einer Flugstrombehandlungsanlage, bei der die für die thermische Behandlung des Materials erforderliche Wärmeenergie primär von einem Heißgaserzeuger bereitgestellt wird, die Stickoxide in dem aus der Flugstrombehandlungsanlage austretenden Abgas im Wesentlichen oder ausschließlich bereits in dem Heißgaserzeuger gebildet wurden, so dass eine Entstickung grundsätzlich bereits im direkten Anschluss an den Heißgaserzeuger erfolgen kann, ohne dass das Abgas im Rahmen der thermischen Behandlung des Materials im relevanten Maße wieder mit Stickoxiden belastet würde. Erfindungsgemäß kann daher bereits eine Entstickung des den Heißgaserzeuger verlassenden Heißgasstroms (gegebenenfalls mit einem oder mehreren weiteren Gasströmen vermischt) erfolgen, wobei diese Entstickung aufgrund der ausreichend hohen Temperaturen des Heißgases ohne Verwendung eines Katalysators und somit insbesondere in Form der selektiven nicht-katalytischen Reduktion erfolgen kann.

Demgemäß ist bei einem gattungsgemäßen Verfahren zur Reduzierung von Stickoxiden im Abgas einer Flugstrombehandlungsanlage mit einer Behandlungskammer, in der ein Material thermisch behandelt wird, wobei die dazu genutzte Wärmeenergie zumindest teilweise von einem Heißgaserzeuger bereitgestellt wird, erfindungsgemäß vorgesehen, dass dem aus dem Heißgaserzeuger stammenden Heißgas ein Reduktionsmittel zugemischt wird, bevor die Temperatur des Heißgases durch insbesondere ein Vermischen mit dem Material (und/oder einem anderen Medium) auf 700°C oder kleiner, vorzugsweise 850°C oder kleiner, sinkt.

Eine zur Durchführung eines erfindungsgemäßen Verfahrens geeignete Flugstrombehandlungsanlage, die zumindest eine Behandlungskammer, in der ein Material mittels eines Heißgases thermisch behandelbar ist, eine Materialaufgabe zum Einbringen des Materials in die Behandlungskammer, einen Heißgaserzeuger zur Erzeugung des Heißgases, wobei das Heißgas über einen Heißgaseinlass in die Behandlungskammer strömen kann, und einen Auslass, über den Abgas aus der Behandlungskammer abführbar ist, umfasst, ist dementsprechend durch eine Reduktionsmitteldosiervorrichtung zum Einbringen eines Reduktionsmittels in das Heißgas gekennzeichnet, wobei die Reduktionsmitteldosiervorrichtung derart in die Flugstrombehandlungsanlage integriert ist, dass das Einbringen des Reduktionsmittels erfolgt, bevor das Heißgas über den Heißgaseinlass in die Behandlungskammer strömt.

Dabei sollte vorzugsweise vorgesehen sein, dass das Reduktionsmittel möglichst kurz hinter dem Heißgaserzeuger dem Heißgas zumischt wird. Das Zumischen erfolgt zumindest, bevor das Heißgas in die Behandlungskammer eingebracht und dort mit dem Material oder zumindest einer Hauptmenge des Materials vermischt wird, da ein solches Vermischen des Heißgases mit dem Material zu einer relativ schnellen und erheblichen Temperaturabsenkung führt, wodurch die Temperatur des Heißgas-Material-Gemisches in der Regel unter die erfindungsgemäß vorgesehene Grenztemperatur fallen kann.

Vorzugsweise kann vorgesehen sein, dass die Temperatur des Heißgases beim Zumischen des Reduktionsmittels auf maximal 1250°C, vorzugsweise maximal 1100°C, besonders bevorzugt maximal 1000°C eingestellt wird, weil sich zu hohe Temperaturen des Heißgases negativ auf den Reduktionsgrad auswirken können. Als Reduktionsmittel kann vorzugsweise ein NHₓ-haltiger Stoff, insbesondere Ammoniak, Harnstoff und/oder Fotoabwasser, genutzt werden.

Für einen ausreichend hohen Wirkungsgrad der Reduktion sollte vorzugsweise vorgesehen sein, dass das Reduktionsmittel derart in das Heißgas eingebracht wird, dass sich eine Verweilzeit von mindestens 0,5 Sekunden, vorzugsweise von mindestens einer Sekunde ergibt, bevor die Temperatur des Heißgases durch ein Vermischen mit dem Material auf 700°C oder kleiner, vorzugsweise auf 850°C oder kleiner, sinkt. Zudem kann vorteilhafterweise vorgesehen sein, dass diese Verweilzeit auf maximal zehn Sekunden begrenzt wird, weil in der Regel durch längere Verweilzeiten nur noch relativ geringe Wirkungsgradsteigerungen für die Reduktion erreicht werden können, gleichzeitig jedoch der Strömungspfad zwischen der Reduktionsmitteldosiervorrichtung und dem Heißgaseinlass in die Behandlungskammer der Flugstrombehandlungsanlage unverhältnismäßig lang wird. In einer weiterhin bevorzugten Ausführungsform des erfindungsgemäßen Verfahrens kann vorgesehen sein, dass das Reduktionsmittel in fester und/oder flüssiger Form in das Heißgas eingebracht wird. Dadurch kann eine vorteilhafte Eindosierung und/oder Verteilung des Reduktionsmittels in das/dem Heißgas erreicht werden. Dem gleichen Zweck kann auch eine Einbringung des Reduktionsmittels in das Heißgas an mehreren Positionen dienen. Dabei können die mehreren Positionen vorzugsweise über einen Querschnitt einer Heißgasleitung der Flugstrombehandlungsanlage verteilt und/oder in Strömungsrichtung des Heißgases beabstandet angeordnet sein.

In einer weiterhin bevorzugten Ausführungsform des erfindungsgemäßen Verfahrens kann vorgesehen sein, dass dem Heißgas nach dem Zumischen des Reduktionsmittels (und gegebenenfalls schon vor einem Vermischen mit dem Material oder zumindest einer Hauptmenge des Materials) zusätzliche Wärmeenergie zugeführt wird. Dies kann insbesondere sinnvoll sein, um die Temperatur des Heißgases während der Verweilzeit, in der die Reduktion der Stickoxide im Wesentlichen erfolgen soll, in einem vorgesehenen Temperaturbereich zu halten, so dass ein Absinken der Temperatur des Heißgases durch beispielsweise das Einbringen des Reduktionsmittels selbst und oder durch Wärmeverluste bei der Durchströmung der Heißgasleitung zu kompensieren. Zudem kann ein Zuführen zusätzlicher Wärmeenergie nach dem Zumischen des Reduktionsmittels auch dann sinnvoll sein, wenn die Temperatur des Heißgases für die Zumischung des Reduktionsmittels auf einen Temperaturbereich eingestellt wird, der geringer als ein bevorzugter Temperaturbereich für die anschließende thermische Behandlung des Materials ist, um sowohl für die Entstickung als auch für die anschließende thermische Behandlung des Materials jeweils einen möglichst hohen Wirkungsgrad erzielen zu können. Diesem Zweck kann auch dienen, wenn dem Heißgas-Material-Gemisch zusätzliche Wärmeenergie zugeführt wird. Dabei könnte dann gleichzeitig oder möglichst kurzfristig anschließend auch ein zusätzliches Reduktionsmittel in das Heißgas-Material-Gemisch eingebracht werden, um eine Erhöhung des Gehalts an Stickoxiden im Abgas, die durch die Einbringung in der zusätzlichen Wärmeenergie erfolgen könnte, zu kompensieren.

Die Zuführung zusätzlicher Wärmeenergie kann beispielsweise durch die Integration eines zusätzlichen Heißgaserzeugers in die Flugstrombehandlungsanlage und/oder durch ein Einbringen eines Brennstoffs, beispielsweise Kohle(staub), in das bereits mit dem Reduktionsmittel vermischte Heißgas beziehungsweise in das Heißgas-Material-Gemisch erreicht werden, wobei der Brennstoff somit erst nach dem Einbringen entzündet wird.

Das aus dem Heißgaserzeuger austretende Heißgas kann gegebenenfalls eine Temperatur aufweisen, die höher als die vorzugsweise vorgesehene maximale Grenztemperatur ist. Insbesondere in diesem Fall kann vorzugsweise vorgesehen sein, dass das Heißgas vor einem Vermischen dem Material (oder zumindest einer Hauptmenge des Materials) gekühlt wird, um die Temperatur des Heißgases für das Vermischen mit dem Reduktionsmittel auf einen bevorzugten Temperaturbereich einzustellen. Ein solches Kühlen des Heißgases kann beispielsweise dadurch erfolgen, dass diesem Kühlluft zugemischt wird. Ebenso besteht die Möglichkeit, dass dem Heißgas eine Teilmenge des Materials zugeführt wird, was ebenfalls mit einer deutlichen Temperaturabsenkung einhergehen kann. Dabei ist vorzugsweise (jedoch nicht zwingend) vorgesehen, dass die "Teilmenge" des Materials hinsichtlich des Massenstroms kleiner als die "Hauptmenge" des Materials ist.

Weiterhin bevorzugt kann vorgesehen sein, dass die Zumischung des Reduktionsmittels in Abhängigkeit von Prozessparametern der Wärmebehandlung, wie beispielsweise der Temperatur und/oder der Art des Brennstoffs, und/oder einem NOₓ-Wert in dem Abgas geregelt wird, um einen möglichst hohen Wirkungsgrad für die Entstickung erzielen zu können.

In einer weiterhin bevorzugten Ausführungsform des erfindungsgemäßen Verfahrens kann zudem noch vorgesehen sein, dass das Abgas zur Reduzierung eines Schadstoffs nachbehandelt wird. Dabei kann auch vorgesehen sein, dass das Abgas noch einem SCR-Katalysator zugeführt wird, sofern besonders hohe Anforderungen an die Reduzierung der Stickoxide im Abgas gestellt werden. Für die dann ergänzende Entstickung im Rahmen einer selektiven katalytischen Reduktion kann auch eine zusätzliche Eindosierung eines Reduktionsmittels vorgesehen sein.

Die Verwendung unbestimmter Artikel ("ein", "einer", "eines", etc.), insbesondere in den Patentansprüchen und dem diese erläuternden Teil der Beschreibung, ist als solche und nicht als Verwendung von Zahlwörtern zu verstehen. Diese Verwendung ist somit so zu verstehen, dass die damit gekennzeichneten Elemente mindestens einmal vorhanden sind und mehrmals vorhanden sein können.

Die Erfindung wird nachfolgend anhand von in den Zeichnungen dargestellten Ausführungsbeispielen näher erläutert. In den Zeichnungen zeigt die
- Fig. 1:: eine erste Ausführungsform einer zur Durchführung eines erfindungsgemäßen Verfahrens geeigneten Flugstrombehandlungsanlage in einer schematischen Darstellung; und
- Fig. 2:: eine zweite Ausführungsform einer zur Durchführung eines erfindungsgemäßen Verfahrens geeigneten Flugstrombehandlungsanlage in einer schematischen Darstellung.

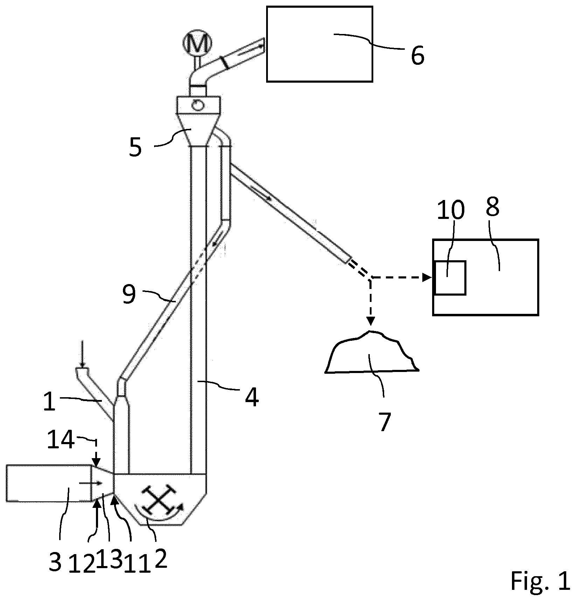

Die Fig. 1 zeigt eine Flugstrombehandlungsanlage, die beispielsweise zur Verarbeitung von lateritischem Nickelerz dienen kann. Die Flugstrombehandlungsanlage umfasst eine Materialaufgabe 1, über die lateritisches Nickelerz einer Zerkleinerungsvorrichtung 2 zugeführt wird. Die Zerkleinerungsvorrichtung 2 ist beispielsweise in Form einer Hammermühle ausgebildet. Im Bereich der Mündung der Materialaufgabe 1 in die Zerkleinerungsvorrichtung 2 ist ein Heißgaseinlass 11 vorgesehen. Über diesen wird Heißgas, das in einem Heißgaserzeuger 3 erzeugt wurde, in die Zerkleinerungsvorrichtung 2 eingebracht. Das Heißgas durchströmt das in der Zerkleinerungsvorrichtung 2 befindliche Nickelerz vor, während und nach der Zerkleinerung und trocknet dieses vor (thermische Behandlung). Das Vermischen des Heißgases mit dem Nickelerz führt zu einem relativ schnellen Absinken der Temperatur des Heißgases auf einen Bereich, der beispielsweise zwischen 650 °C und 400 °C im Bereich der Mündung der Materialaufgabe 1 und zwischen 300 °C und 200 °C im Bereich des Übergangs von der Zerkleinerungsvorrichtung 2 in einen sich an diese anschließenden Trockner 4 liegen kann.

Die Durchströmung des Nickelerzes hält auch in dem sich an die Zerkleinerungsvorrichtung 2 anschließenden Trockner 4, der in Form eines Steigrohrtrockners ausgebildet ist, an. Dabei wirkt das Heißgas nicht nur trocknend (und damit thermisch behandelnd) sondern auch als Trägerfluid, durch das die zerkleinerten Partikel des Nickelerzes in den Steigrohrtrockner und innerhalb des Steigrohrtrockners entgegen der Schwerkraft gefördert werden (Flugstrom).

An den Trockner 4 schließt sich eine Trennvorrichtung 5 in Form eines Sichters an. In diesem wird das zerkleinerte Nickelerz in einen Feinanteil und einen Grobanteil getrennt.

Der Feinanteil, der den limonitischen Anteil des Nickelerzes im Wesentlichen umfasst, wird aus der Trennvorrichtung 5 in ein erstes Weiterverarbeitungssystem 6 gefördert und wird darin vorzugsweise mittels eines hydrometallurgischen Verfahrens, z.B. einem "High Pressure Acid Leaching"-Verfahren, einem "Pressure Acid Leaching"-Verfahren oder einem "Atmospheric Leaching"-Verfahren, verarbeitet, um nickelhaltige Stoffe aus dem Feinanteil zu separieren. Dazu wird der Feinanteil zunächst von dem als Trägerfluid dienenden Heißgas getrennt. Das Heißgas wird dann als Abgas in die Atmosphäre entlassen.

Um die Belastung des Abgases mit Stickoxiden zu reduzieren ist erfindungsgemäß vorgesehen, mittels einer Reduktionsmitteldosiervorrichtung 12 ein beispielsweise ammoniakhaltiges Reduktionsmittel in eine Heißgasleitung 13, die den Heißgaserzeuger 3 mit dem Heißgaseinlass 11 der Zerkleinerungsvorrichtung 2 verbindet, einzudüsen, um eine selektive nicht-katalytische Reduktion der Stickoxide im Heißgas zu Stickstoff und Wasser zu erreichen. Dabei ist die Reduktionsmitteldosiervorrichtung 12 möglichst kurz hinter einem Auslass des Heißgaserzeugers 3 positioniert, so das eine möglichst lange Verweildauer für das Reduktionsmittel in dem Heißgas erreicht werden kann, bevor dieses durch einen Wärmeübergang auf das Nickelerz in der Zerkleinerungsvorrichtung 2 soweit abgekühlt wird, dass die vorgesehene Reduktion der Stickoxide nicht mehr im relevanten Maße umsetzbar ist.

Für die Erzielung eines möglichst hohen Reduktionsgrads, der in der Regel bei einer Temperatur des Heißgases von ca. 900°C am höchsten ist, kann es sinnvoll sein, das Heißgas, das den Heißgaserzeuger 3 mit einer deutlich darüber liegenden Temperatur von beispielsweise 1250 °C verlässt, aktiv zu kühlen, indem über einen zusätzlichen Einlass 14 ein Kühlmedium in den Heißgasstrom eingebracht wird. Bei dem Kühlmedium kann es sich beispielsweise um Kühlluft handeln. Möglich ist aber auch, eine Teilmenge des in der Zerkleinerungsvorrichtung 2 und dem Trockner 4 thermisch zu behandelnden Nickelerzes abzuzweigen und in die Heißgasleitung 13 einzubringen. Ein Vorteil der Nutzung einer Teilmenge des Nickelerzes zur Kühlung des Heißgases ist, dass der die Reduzierung der Temperatur des Heißgases bewirkende Wärmeübergang auf das thermisch zu behandelnde Material selbst und nicht auf ein sonstiges Kühlmedium erfolgt, wodurch eine Reduzierung des Wirkungsgrads der thermischen Behandlung insgesamt vermieden oder gering gehalten werden kann.

Der in der Trennvorrichtung 5 anfallende Grobanteil, der den saprolitischen Anteil des Nickelerzes im Wesentlichen umfasst und der beispielsweise zwischen ca. 5% und 10% des insgesamt zugeführten Nickelerzes ausmachen kann, kann zum einen aus dem Prozess ausgeschleust und somit nicht zur Gewinnung von nickelhaltigen Stoffen genutzt werden. Beispielsweise kann der ausgeschleuste Grobanteil dann auf eine Deponie 7 ausgelagert werden. Durch das Ausschleusen wird erreicht, dass der Grobanteil nicht im Rahmen des in dem ersten Weiterverarbeitungssystem 6 durchgeführten hydrometallurgischen Verfahrens mit verarbeitet wird, wodurch der Verarbeitungsaufwand und insbesondere der entsprechende Energiebedarf gering gehalten werden kann.

Zum anderen kann der Grobanteil auch zu einem zweiten Weiterverarbeitungssystem 8 gefördert werden, in dem mittels eines pyrometallurgischen Verfahrens, z.B. einem "Rotary Kiln/Electric Furnace"-Verfahren oder der "New Smelting Technology", nickelhaltige Stoffe aus dem Grobanteil separiert werden. Dies weist den Vorteil auf, dass die gesamte der Anlage zugeführte Menge des Nickelerzes für die Separierung und folglich Gewinnung der nickelhaltigen Stoffe genutzt wird, wobei durch eine möglichst optimale Anpassung der Verfahren auf die separat weiter zu verarbeitenden Fein- und Grobanteile jeweils hohe individuelle Separierungsgrade und folglich ein besonders hoher Gesamtseparierungsgrad für die Gewinnung der nickelhaltigen Stoffe aus dem Nickelerz erzielt werden können. Zur Vorbereitung des Grobanteils für die Separierung der nickelhaltigen Stoffe kann das zweite Weiterverarbeitungssystem 8 eine weitere Zerkleinerungsvorrichtung 10 umfassen, in der die Partikel des Grobanteils weiter zerkleinert werden.

Bei der in der Fig. 1 dargestellten Anlage ist auch die Möglichkeit vorgesehen, den in der Trennvorrichtung 5 abgetrennten Grobanteil des Nickelerzes bedarfsweise teilweise oder vollständig über eine Rückführleitung 9 zur Materialaufgabe 1 zurückzuführen, um diesen wiederum durch die Zerkleinerungsvorrichtung 2, den Trockner 4 sowie die Trennvorrichtung 5 zu führen.

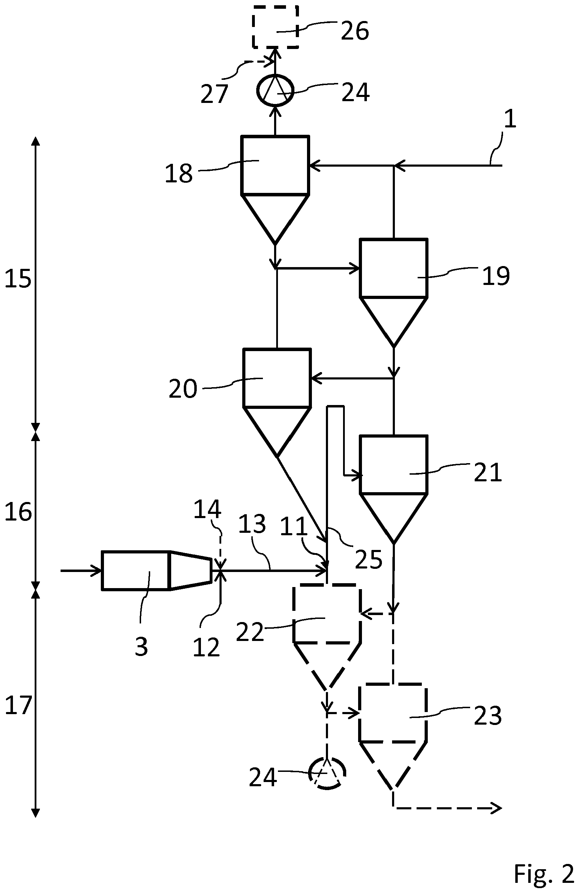

Die in der Fig. 2 dargestellte Flugstrombehandlungsanlage zur thermischen Behandlung von insbesondere feinkörnigem Material enthält einen mehrstufigen Zyklonwärmetauscher mit einer Vorwärmzone 15, einer Hochtemperaturzone (beispielsweise Calcinierzone) 16 und einer Kühlzone 17. Die Vorwärmzone 15 umfasst die (bezogen auf die Schwerkraftrichtung) drei oberen Zyklone 18, 19 und 20 des Zyklonwärmetauschers. Die unterhalb der Vorwärmzone 15 gelegene Hochtemperaturzone 16 umfasst einen Heißgaserzeuger 3 sowie einen Zyklon 21 und die unter der Hochtemperaturzone 16 gelegene Kühlzone 17 umfasst die zwei übrigen Zyklone 22 und 23 des Zyklonwärmetauschers. Die Kühlzone 17 ist optional dargestellt, da das Material auch nach dem Zyklon 21 einer weiteren Verarbeitungseinrichtung direkt zugeführt werden kann. Die genannten Komponenten der Flugstrombehandlungsanlage sind in der aus der Fig.2 ersichtlichen Weise über Gas- und Materialleitungen miteinander verbunden.

Ein durch Verdichter 24 geförderter Luftstrom durchsetzt nacheinander die Zyklone 23 und 22 und gelangt dann in die Hochtemperaturzone 16. Dort wird dieser Luftstrom mit Heißgas, das in dem Heißgaserzeuger 3 durch Verbrennen von Brennstoff mit beispielsweise Umgebungsluft erzeugt wird, vermischt. Die den Zyklon 21 der Hochtemperaturzone 16 verlassende Gasströmung durchsetzt anschließend die Zyklone 20, 19 und 18 der Vorwärmzone 15 und wird dann abgeführt.

Das feinkörnige Material wird über eine Materialaufgabe 1 in den Zyklonwärmetauscher aufgegeben, durchsetzt dann in bekannter Weise die Zyklone 18, 19 und 20 der Vorwärmzone 15 und wird anschließend in die zum Zyklon 21 führende Steigleitung 25 eingetragen, in der die Hochtemperaturbehandlung des vorgewärmten Materials erfolgt. Im Zyklon 21 wird das in der Hochtemperaturzone 16 behandelte Material aus dem Gasstrom abgeschieden und gelangt dann gegebenenfalls in die Kühlzone 17 und wird anschließend als Fertiggut abgeführt.

Erfindungsgemäß wird über eine Reduktionsmitteldosiervorrichtung 12 ein beispielsweise ammoniakhaltiges Reduktionsmittel in eine Heißgasleitung 13, die den Heißgaserzeuger 3 mit einem Heißgaseinlass 11 der Steigleitung 25 verbindet, eingedüst, um eine selektive nicht-katalytische Reduktion der Stickoxide im Heißgas zu Stickstoff und Wasser zu erreichen. Dabei ist die Reduktionsmitteldosiervorrichtung 12 möglichst kurz hinter einem Auslass des Heißgaserzeugers 3 positioniert, um eine möglichst lange Verweildauer für das Reduktionsmittel in dem Heißgas zu erreichen, bevor dieses durch ein Vermischen mit der aus der Kühlzone 17 stammenden Luft sowie dem anschließenden Vermischen mit dem aus dem letzten Zyklon 20 der Vorwärmzone 15 stammenden Material soweit abgekühlt wird, dass die vorgesehene Reduktion der Stickoxide nicht mehr im relevanten Maße umsetzbar ist.

Wie bei der Flugstrombehandlungsanlage gemäß der Fig. 1 kann auch bei derjenigen gemäß der Fig. 2 vorgesehen sein, ein Kühlmedium über einen zusätzlichen Einlass 14 in die Heißgasleitung einzubringen, um eine Absenkung der Temperatur des den Heißgaserzeuger 3 mit einer Temperatur von beispielsweise ca. 1250°C verlassenden Heißgases auf ca. 900 °C und damit einen möglichst hohen Wirkungsgrad für die Reduktion der Stickoxide zu erreichen.

In der Fig. 2 ist noch die Möglichkeit dargestellt, das die Flugstrombehandlungsanlage verlassende Abgas im Rahmen einer selektiven katalytischen Reduktion noch weiter zu behandeln, um eine möglichst optimale Entstickung erreichen zu können. Dazu kann der Abgasauslass des Zyklonwärmetauschers mit einem entsprechenden Reduktionskatalysator 26 verbunden sein. Gegebenenfalls kann dafür auch noch eine zusätzliche Reduktionsmitteldosiervorrichtung 27 stromauf des Reduktionskatalysators 26 angeordnet sein, sofern der Gehalt an über die in die Heißgasleitung 13 mündende Reduktionsmitteldosiervorrichtung 12 eingebrachten Reduktionsmittels im Abgas für die selektive katalytische Reduktion nicht (mehr) ausreichend ist und/oder für die selektive katalytische Reduktion ein anderes Reduktionsmittel eingesetzt werden soll. Selbstverständlich kann auch die in der Fig. 1 dargestellte Flugstrombehandlungsanlage mit den entsprechenden Komponenten für eine nachgeschaltete selektive katalytische Reduktion ausgestattet sein.

### Bezugszeichen:

- 1.: Materialaufgabe
- 2.: Zerkleinerungsvorrichtung
- 3.: Heißgaserzeuger
- 4.: Trockner
- 5.: Trennvorrichtung
- 6.: erstes Weiterverarbeitungssystem
- 7.: Deponie
- 8.: zweites Weiterverarbeitungssystem
- 9.: Rückführleitung
- 10.: weitere Zerkleinerungsvorrichtung
- 11.: Heißgaseinlass
- 12.: Reduktionsmittedosiervorrichtung
- 13.: Heißgasleitung
- 14.: zusätzlicher Einlass
- 15.: Vorwärmzone
- 16.: Hochtemperaturzone
- 17.: Kühlzone
- 18.: Zyklon
- 19.: Zyklon
- 20.: Zyklon
- 21.: Zyklon
- 22.: Zyklon
- 23.: Zyklon
- 24.: Verdichter
- 25.: Steigleitung
- 26.: Reduktionskatalysator
- 27.: zusätzliche Reduktionsmitteldosiervorrichtung

## Patentansprüche

1. Verfahren zur Reduzierung von Stickoxiden im Abgas einer Flugstrombehandlungsanlage mit einer Behandlungskammer, in der ein Material thermisch behandelt wird, wobei die dazu genutzte Wärmeenergie zumindest teilweise von einem Heißgaserzeuger (3) bereitgestellt wird und wobei dem aus dem Heißgaserzeuger (3) stammenden Heißgas ein Reduktionsmittel zugemischt wird, bevor die Temperatur des Heißgases auf 700°C oder kleiner, vorzugsweise 850°C oder kleiner sinkt, **dadurch gekennzeichnet, dass** das Reduktionsmittel zugemischt wird, bevor das Heißgas in die Behandlungskammer eingebracht und dort mit dem Material oder einer Hauptmenge des Materials vermischt wird.

2. Verfahren gemäß Anspruch 1, **dadurch gekennzeichnet, dass** die Temperatur des Heißgases beim Zumischen des Reduktionsmittels auf maximal 1250°C, vorzugsweise maximal 1100°C, besonders bevorzugt maximal 1000°C eingestellt wird.

3. Verfahren gemäß einem der vorhergehenden Ansprüche, **dadurch gekennzeichnet, dass** das Reduktionsmittel derart in das Heißgas eingebracht wird, dass sich eine Verweilzeit von mindestens 0,5 Sekunden, vorzugsweise mindestens einer Sekunde und/oder maximal zehn Sekunden ergibt, bevor die Temperatur des Heißgases auf 700°C oder kleiner, vorzugsweise 850°C oder kleiner sinkt.

4. Verfahren gemäß einem der vorhergehenden Ansprüche, **dadurch gekennzeichnet, dass** das Reduktionsmittel an mehreren Positionen in das Heißgas eingebracht wird.

5. Verfahren gemäß Anspruch 4, **dadurch gekennzeichnet, dass** die mehreren Positionen über einen Querschnitt einer Heißgasleitung (13) verteilt und/oder in Strömungsrichtung des Heißgases beabstandet angeordnet sind.

6. Verfahren gemäß einem der vorhergehenden Ansprüche, **dadurch gekennzeichnet, dass** dem Heißgas nach dem Zumischen des Reduktionsmittels zusätzliche Wärmeenergie zugeführt wird.

7. Verfahren gemäß einem der vorhergehenden Ansprüche, **dadurch gekennzeichnet, dass** das Heißgas vor dem Vermischen mit dem Material gekühlt wird.

8. Verfahren gemäß Anspruch 7, **dadurch gekennzeichnet, dass** dem Heißgas Kühlluft zugemischt wird.

9. Verfahren gemäß Anspruch 7 oder 8, **dadurch gekennzeichnet, dass** dem Heißgas zu Kühlung vor dem Vermischen mit einer Hauptmenge des Materials eine Teilmenge des Materials zugeführt wird.

10. Verfahren gemäß einem der vorhergehenden Ansprüche, **dadurch gekennzeichnet, dass** die Zumischung des Reduktionsmittels in Abhängigkeit von Prozessparametern der Wärmebehandlung und/oder einem Stickoxidgehalt in dem Abgas geregelt wird.

11. Verfahren gemäß einem der vorhergehenden Ansprüche, **dadurch gekennzeichnet, dass** dem Material nach dem Vermischen mit dem Heißgas zusätzliche Wärmeenergie und/oder ein zusätzliches Reduktionsmittel zugeführt werden.

12. Verfahren gemäß einem der vorhergehenden Ansprüche, **dadurch gekennzeichnet, dass** das Abgas zur Reduzierung eines Schadstoffs nachbehandelt wird.

13. Verfahren gemäß Anspruch 12, **dadurch gekennzeichnet, dass** das Abgas einem SCR-Katalysator zugeführt wird.

## Claims

1. Method for reducing nitrogen oxides in the exhaust gas of an entrained flow treatment system having a treatment chamber in which a material is thermally treated, the thermal energy used for this being provided at least in part by a hot-gas generator (3) and a reducing agent being admixed with the hot gas from the hot-gas generator (3) before the temperature of the hot gas drops to 700°C or less, preferably 850°C or less, **characterized in that** the reducing agent is admixed before the hot gas is introduced into the treatment chamber and is mixed with the material or a main portion of the material there.

2. Method according to claim 1, **characterized in that** the temperature of the hot gas when the reducing agent is admixed is set to a maximum of 1250°C, preferably a maximum of 1100°C, particularly preferably a maximum of 1000°C.

3. Method according to either of the preceding claims, **characterized in that** the reducing agent is introduced into the hot gas such that there is a residence time of at least 0.5 seconds, preferably at least one second and/or a maximum of ten seconds, before the temperature of the hot gas drops to 700°C or less, preferably 850°C or less.

4. Method according to any of the preceding claims, **characterized in that** the reducing agent is introduced into the hot gas at a plurality of positions.

5. Method according to claim 4, **characterized in that** the plurality of positions are distributed over a cross section of a hot-gas line (13) and/or are spaced apart in the flow direction of the hot gas.

6. Method according to any of the preceding claims, **characterized in that** additional thermal energy is supplied to the hot gas after admixing the reducing agent.

7. Method according to any of the preceding claims, **characterized in that** the hot gas is cooled before mixing with the material.

8. Method according to claim 7, **characterized in that** the hot gas is admixed with cooling air.

9. Method according to either claim 7 or claim 8, **characterized in that** a partial amount of the material is supplied to the hot gas for cooling before mixing with a main amount of the material.

10. Method according to any of the preceding claims, **characterized in that** the admixture of the reducing agent is regulated depending on the process parameters of the heat treatment and/or a nitrogen oxide content in the exhaust gas.

11. Method according to any of the preceding claims, **characterized in that** additional thermal energy and/or an additional reducing agent are supplied to the material after mixing with the hot gas.

12. Method according to any of the preceding claims, **characterized in that** the exhaust gas is post-treated to reduce a pollutant.

13. Method according to claim 12, **characterized in that** the exhaust gas is supplied to an SCR catalyst.

## Revendications

1. Procédé de réduction d'oxydes d'azote contenus dans les effluents gazeux d'une installation de traitement à lit fluidisé entraîné, ladite installation comprenant une chambre de traitement dans laquelle un matériau est traité thermiquement, où l'énergie thermique utilisée pour procéder à ce traitement est fournie au moins en partie par un générateur de gaz chaud (3), et où un moyen de réduction est ajouté et mélangé au gaz chaud provenant du générateur de gaz chaud (3), avant que la température du gaz chaud baisse, passant à 700°C ou moins, passant de préférence à 850°C ou moins, **caractérisé en ce que** le moyen de réduction est ajouté et mélangé, avant que le gaz chaud soit introduit dans la chambre de traitement et qu'il y soit mélangé avec le matériau ou avec une quantité principale dudit matériau.

2. Procédé selon la revendication 1, **caractérisé en ce que** la température du gaz chaud, au moment où le moyen de réduction est ajouté et mélangé, est réglée au maximum sur 1250°C, de préférence au maximum sur 1100°C, de manière particulièrement préférée au maximum sur 1000°C.

3. Procédé selon l'une des revendications précédentes, **caractérisé en ce que** le moyen de réduction est introduit dans le gaz chaud, de manière telle qu'il en résulte un temps de séjour au moins de 0,5 seconde, de préférence au moins d'une seconde et/ou au maximum de dix secondes, avant que la température du gaz chaud baisse, passant à 700°C ou moins, passant de préférence à 850°C ou moins.

4. Procédé selon l'une quelconque des revendications précédentes, **caractérisé en ce que** le moyen de réduction est introduit dans le gaz chaud, au niveau de plusieurs positions.

5. Procédé selon la revendication 4, **caractérisé en ce que** les différentes positions sont réparties sur une section d'une conduite de gaz chaud (13) et/ou disposées en étant espacées dans la direction d'écoulement du gaz chaud.

6. Procédé selon l'une quelconque des revendications précédentes, **caractérisé en ce que** de l'énergie thermique supplémentaire est fournie au gaz chaud, une fois que le moyen de réduction a été ajouté et mélangé.

7. Procédé selon l'une quelconque des revendications précédentes, **caractérisé en ce que** le gaz chaud est refroidi avant d'être mélangé avec le matériau.

8. Procédé selon la revendication 7, **caractérisé en ce que** de l'air de refroidissement est ajouté et mélangé au gaz chaud.

9. Procédé selon la revendication 7 ou 8, **caractérisé en ce qu'**une quantité partielle du matériau est fournie au gaz chaud, pour servir au refroidissement se produisant avant le mélange avec une quantité principale du matériau.

10. Procédé selon l'une quelconque des revendications précédentes, **caractérisé en ce que** le mélange du moyen de réduction ayant été ajouté est réglé en fonction de paramètres de processus du traitement thermique et/ou en fonction d'une teneur en oxydes d'azote contenus dans les effluents gazeux.

11. Procédé selon l'une quelconque des revendications précédentes, **caractérisé en ce que** de l'énergie thermique supplémentaire et/ou un moyen de réduction supplémentaire sont fournis au matériau après le mélange avec le gaz chaud.

12. Procédé selon l'une quelconque des revendications précédentes, **caractérisé en ce que** les effluents gazeux sont soumis à un retraitement servant à la réduction d'une substance polluante.

13. Procédé selon la revendication 12, **caractérisé en ce que** les effluents gazeux sont fournis à un catalyseur SCR.
